# EUROPEAN PATENT APPLICATION

(11) **EP 3 637 336 A1**
(43) Date of publication of application: **15.04.2020**
(21) Application number: 18199578.8
(22) Date of filing: 10.10.2018
(51) Int. Cl.: G06Q 10/08, B60R 5/00, B60R 5/04

(54) **HANDLING OF VEHICLE STORAGE SPACE**

(71) Applicant: Volvo Car Corporation, 405 31 Göteborg (SE)
(72) Inventor: Zackrisson, Sofia, 417 06 Göteborg (SE); Olofsson, Petter, 224 64 Lund (SE); Waldén, Gert, 446 95 Älvängen (SE); Landqvist, Peter, 433 69 Sävedalen (SE); Nilsson, Tony, 428 34 Kållered (SE)
(74) Representative: Valea AB

(57) **Abstract**

The present disclosure relates to a method performed by a storage area disposition system (1) of a vehicle (2) for handling storage space of a vehicle storage area (21). The storage area disposition system receives (1001) a location request signal (5) associated with a desired location (3) of at least a first movable partitioning wall (221) of the storage area (21). The storage area disposition system further arranges the at least first movable partitioning wall in the desired location, wherein the at least first movable partitioning wall divides the storage area into at least a first (241) and a second (242) separate storage compartment.

The disclosure also relates to a storage area disposition system in accordance with the foregoing, and a vehicle comprising such a storage area disposition system.

## Description

### TECHNICAL FIELD

The present disclosure relates to handling storage space of a vehicle storage area.

### BACKGROUND

Ride-sharing and carpooling are becoming more popular every year, and it is nowadays rather common to order transportation upon demand rather than owning a vehicle. Such an approach is not only convenient for the rider in that he or she does not need to worry about maintenance of the vehicle or having to find a parking space, additionally it may be economically beneficial.

In a not too distant future, the automotive industry is expected to have succeeded in developing fully autonomous vehicles. By then, it may further be common that passengers - who may be strangers to one another - travel together in driver-less vehicles.

US20180039917 A1, for instance, relates to selecting, scheduling and configuring ride-sharing vehicles and to managing rider pick-up and drop-off, and discloses how a reserved seating location may be used to align the seating/door with a passenger during pick-up, adjust vehicle accessory settings associated with the reserved seating location, and activate a visual indicator to direct the passenger to the reserved seating location. However, although US20180039917 A1 supports facilitated scheduling of ride-sharing passengers, there is still room for improvement and/or for alternative solutions when it comes to handling of luggage of such ride-sharing passengers.

### SUMMARY OF THE INVENTION

It is therefore an object of embodiments herein to provide an approach of in an alternative and/or improved manner handling storage space of a vehicle storage area.

According to a first aspect of embodiments herein, the object is achieved by a method performed by a storage area disposition system of a vehicle for handling storage space of a vehicle storage area. The storage area disposition system receives a location request signal associated with a desired location of at least a first movable partitioning wall of the storage area. The storage area disposition system further arranges the at least first movable partitioning wall in the desired location, wherein the at least first movable partitioning wall divides the storage area into at least a first and a second separate storage compartment.

Thereby, there is introduced an approach which enables a storage area of a vehicle to be adapted storage wise. That is, since there is received a location request signal associated with a desired location of at least a first movable partitioning wall of the storage area, electronic input is received indicating a position of where at least one movable storage area section wall is wanted and/or requested. Moreover, that is, since the storage area disposition system then arranges the at least first movable partitioning wall in the desired location, wherein the at least first movable partitioning wall divides the storage area into at least a first and a second separate storage compartment, the at least first movable partitioning wall is positioned in accordance with the requested disposition such that two or more separate storage compartments are provided respectively having sizes affected by the location of the at least first movable partitioning wall. Thereby, with the introduction of one or more movable partitioning walls within the storage area, two or more separate storage compartments of flexible size are provided and/or supported, the sizes thereof depending on the location of the one or more movable partitioning walls. Accordingly, the size of respective separate storage compartment may be adapted in a flexible manner, for instance to suit a respective volume of luggage and/or cargo planned for storage in respective separate storage compartment, e.g. by one or more potential ride-sharing vehicle occupants and/or cargo planning operators.

For that reason, an approach is provided which in an alternative and/or improved manner handles storage space of a vehicle storage area.

The technical features and corresponding advantages of the above mentioned method will be discussed in further detail in the following.

By introducing a method performed by a storage area disposition system of a vehicle for handling storage space of a vehicle storage area, an approach is provided which enables a storage area of a vehicle to be adapted storage wise. The storage area may be of any arbitrary size and/or shape, e.g. be represented by the entire or essentially the entire luggage compartment and/or cargo area of the vehicle. The storage area may further be situated in any arbitrary location of the vehicle, e.g. in the rear thereof facing a tailgate of the vehicle. Walls and/or windows of the vehicle facing the storage area may constitute outer limiting walls thereof. "Storage area disposition system" may refer to "storage space disposition system", "luggage compartment disposition system", "storage disposition system" and/or "storage area allocation system", whereas the expression storage area disposition system "of" a vehicle may refer to storage area disposition system "comprised in" a vehicle. "Handling" storage space may refer to "adapting, distributing, allocating, and/or dividing" storage space, whereas "storage space" may refer to "available storage". Vehicle "storage area" may refer to vehicle "luggage compartment"," trunk", "loading area" and/or "cargo area". According to an example, the expression "for handling storage space of a vehicle storage area" may refer to "for adapting a storage space to luggage of passengers of said vehicle".

The referred to "vehicle" may be represented by any arbitrary vehicle, for instance an engine-propelled vehicle, such as e.g. a car, truck, lorry, van, and/or bus. The vehicle may further be at least partly semi-autonomous, or even fully autonomous. Moreover, the vehicle may be adapted to communicate wirelessly with an electronic user device and/or a remote vehicles management system supporting communication with one or more vehicles. The referred to optional electronic user device may refer to any commonly known user device supporting Internet dependent applications, such as e.g. a multifunctional smartphone, a surf plate such as e.g. an iPad, a portable or stationary computer, a Pocket PC, a PDA, an iPod and/or successors or equivalents thereof. The referred to optional "vehicles management system" supporting communication with one or more vehicles, may refer to "a control system", "a back-end system", "a management system", "one or more services", "one or more functions", "one or more servers", and/or "one or more automotive clouds adapted for cloud-based storage" supporting communication with one or more vehicles. The expression "automotive clouds" may refer to "automotive cloud network" and further to "automotive clouds adapted for storage and/or cloud-based storage and for wirelessly transmitting data to, and/or receiving data from, vehicles". Moreover, the expression "vehicles management system supporting communication with" one or more vehicles, may refer to "vehicles management system adapted to communicate with" one or more vehicles, "vehicles management system adapted for wirelessly transmitting data to and/or receiving data from" one or more vehicles, and/or "vehicles management system supporting wireless communication with" one or more vehicles. Said vehicles management system may for instance refer to a commonly known system adapted to wirelessly communicate with one or more vehicles, remotely control functionality of said vehicles and/or hold information associated with said vehicles; for instance a management and/or assisting system such as e.g. Volvo On Call or an equivalent or successor thereof.

Since the storage area disposition system receives a location request signal associated with a desired location of at least a first movable partitioning wall of the storage area, electronic input is received indicating a position of where at least one movable storage area section wall is wanted and/or requested. That is, the at least first movable partitioning wall may have a default location from which it may be rearranged, for instance moved in an essentially horizontal and/or an essentially vertical direction within the storage area. The desired location of the movable partitioning wall may hence be a desired position of the partitioning wall in an essentially horizontal and/or an essentially vertical direction within the storage area. The desired location - and/or default location - may range from adjacent one limiting wall of the storage area to adjacent an opposite limiting wall thereof. The at least first movable partitioning wall may hence be moved any arbitrary distance, e.g. ranging from a few millimetres up to tenths of centimetres, or even metres should the storage area be of significant size.

The at least first movable partitioning wall may be of any arbitrary material, thickness, shape and/or size, for instance of a rigid material a few millimetres or centimetres thick, of essentially rectangular shape with a depth a predetermined percentage of a storage area depth such as e.g. up to 100 percent of said storage area depth and/or a height a predetermined percentage of a storage area height such as e.g. up to 100 percent of said storage area height. A second, third, fourth etc. movable partitioning wall - which may have different default locations within the storage area - may be identical to the first movable partitioning wall, and/or have different dimensions and/or comprise different material(s).

The location request signal may be received from any entity adapted to directly or indirectly communicate with the storage disposition system, e.g. from another ECU and/or node of the vehicle, an electronic user device as discussed above and/or a vehicles management system supporting communication with one or more vehicles similarly discussed above. "Receiving" a location request signal may hence refer to "deriving", "determining", "receiving electronically", "receiving wirelessly", "receiving from an electronic user device" and/or "receiving from an electronic user device via a remote vehicles management system supporting communication with one or more vehicles" a location request signal. "Location" request signal, on the other hand, may refer to "position and/or positioning" request signal, whereas location request "signal" may refer to location request "electrical and/or digital signal", "message", and/or "input". "Associated with" a desired location may refer to "indicating and/or specifying" a desired location, whereas "desired" location may refer to "requested" location. "Location" of at least a first movable partitioning wall may refer to ", disposition, position and/or positioning" of at least a first movable partitioning wall, whereas "movable" partitioning wall may refer to "movable in an essentially horizontal plane", "slidable", "flexible" and/or "adjustable" partitioning wall. The expression movable "partitioning wall" may refer to merely movable "wall" and further to movable "partitioning cassette", "partitioning section", "separating wall" and/or "dividing wall".

Since the storage area disposition system then arranges the at least first movable partitioning wall in the desired location, wherein the at least first movable partitioning wall divides the storage area into at least a first and a second separate storage compartment, the at least first movable partitioning wall is positioned in accordance with the requested disposition such that two or more separate storage compartments are provided respectively having sizes affected by the location of the at least first movable partitioning wall. Thereby, with the introduction of one or more movable partitioning walls within the storage area, two or more separate storage compartments of flexible size are provided and/or supported, the sizes thereof depending on the location of the one or more movable partitioning walls. That is, should a single movable partitioning wall be provided, then two separate storage compartments of flexible sizes may be supported; correspondingly, should two movable partitioning walls in parallel or essentially in parallel with one another be provided, then three separate storage compartments of flexible sizes may be supported, and so forth. Accordingly, the size of respective separate storage compartment may be adapted in a flexible manner, for instance to suit a respective volume of luggage and/or cargo planned for storage in respective separate storage compartment, e.g. by one or more potential ride-sharing vehicle occupants and/or cargo planning operators.

Each respective separate storage compartment may be a respective enclosed storage compartment, and further, access to respective separate storage compartment may be separate for each of said storage compartment. Thereby, the storage area may be divided into separate enclosed storage compartments with individual access, suitable for storing luggage and/or cargo to which separate access is preferable and/or requested. A storage compartment may for instance be enclosed with support from a closing arrangement which may have dimensions adapted to fit an opening of the storage compartment, which opening width and/or height may vary with movement of a movable partitioning wall at least partly enclosing said storage compartment. The closing arrangement may e.g. be represented by and/or comprise a roll-out, roll-up or roll-down curtain, cover or jalousie or the like, and further be lockable with support from any arbitrary locking mechanism known in the art.

"Arranging said at least first movable partitioning wall in" the desired location may refer to "moving and/or rearranging said at least first movable partitioning wall to" the desired location, and further to "arranging said at least first movable partitioning wall to be located in" the desired location. "Divides" the storage area may refer to "arranges", "disposes" and/or "splits" the storage area, whereas "at least a first and a second separate storage compartment" may refer to "two or more separate storage compartments". "Separate" storage compartment, on the other hand, may refer to "individual and/or private" storage compartment, whereas separate "storage compartment" may refer to separate "storage section", "locker", "cargo compartment" and/or "luggage compartment". According to an example, the expression "wherein said at least first movable partitioning wall divides said storage area into at least a first and a second separate storage compartment" may refer to "wherein said at least first movable partitioning wall divides said storage area into at least a first and a second separate storage compartment, said first movable partitioning wall representing a movable wall separating said first separate storage compartment from said second separate storage compartment".

Arranging the at least first movable partitioning wall in the desired location may be accomplished in any arbitrary manner, e.g. with techniques known in the art. Optionally, however, the storage area disposition system may further comprise one or more electrical motors, whereby arranging the at least first movable partitioning wall may comprise arranging the at least first movable partitioning wall by means of said one or more electrical motors. Thereby, the at least first movable partitioning wall may be moved and/or rearranged in a convenient manner. The number of electrical motors and/or positioning thereof may be arbitrarily selected as deemed appropriate for the implementation at hand, e.g. may each respective movable partitioning wall be supported by a respective electrical motor, e.g. with support from a wire system. "By means of" one or more electrical motors may refer to "with support from" and/or "utilizing" one or more electrical motors, whereas "arranging" in this context may refer to "displacing".

Optionally, the storage area may further comprise one or more fixed partitioning walls arranged such that they in combination with the at least first movable partitioning wall and at least one respective closing arrangement provide that the at least first and/or second separate storage compartment respectively is a separate enclosed storage compartment supporting separate access. Thereby, the storage area may be divided into separate enclosed storage compartments with individual access, e.g. disposed on two or more different levels and/or in two or more different sections separated by said one or more fixed partitioning walls. Thus, each respective separate enclosed storage compartment provided with support from the one or more fixed partitioning walls - which respective separate enclosed storage compartment supports separate access by means of at least one respective closing arrangement - may accordingly be suitable for storing luggage and/or cargo to which separate access is preferable and/or requested. Access to respective separate enclosed storage compartment may be provided in any arbitrary manner, for instance may the closing arrangement have dimensions adapted to fit an opening of a separate enclosed storage compartment which opening width and/or height may vary with movement of a movable partitioning wall at least partly enclosing said storage compartment. The closing arrangement may for instance be represented by and/or comprise a roll-out, roll-up or roll-down curtain, cover or jalousie or the like. The closing arrangement may be opened and closed in any arbitrary manner, e.g. manually and/or electronically. Moreover, the closing arrangement may be of any arbitrary material, thickness, shape and/or size deemed suitable for the implementation at hand, for instance a jalousie of plastic material a few millimetres thick.

The at least one fixed partitioning wall may be of any arbitrary material, thickness, shape and/or size, for instance of a rigid material a few millimetres or centimetres thick, of essentially rectangular shape with a depth a predetermined percentage of a storage area depth such as e.g. up to 100 percent of said storage area depth and/or a width a predetermined percentage of a storage area width such as e.g. up to 100 percent of said storage area width. A second, third, fourth etc. fixed partitioning wall - which may have different locations and/or orientations than the first fixed partitioning wall - may be identical to said first fixed partitioning wall, and/or have different dimensions and/or comprise different material(s). The one or more fixed partitioning walls may be arranged essentially perpendicular to - and/or in parallel with - the one or more movable partitioning walls. Should the at least one fixed partitioning wall be located in an essentially horizontal plane, then said fixed partitioning wall preferably has dimensions adapted to carry weight from luggage and/or cargo. Moreover, the one or more fixed partitioning walls may be located in any arbitrary manner within the storage area, e.g. respectively in parallel or essentially in parallel with the storage area bottom and/or floor and/or respectively perpendicular or essentially perpendicular thereto. Should a fixed partitioning wall be provided, e.g. essentially in parallel with a bottom floor of the storage area at an arbitrary height therefrom such as e.g. at essentially half the height of the storage area, then two separate levels of separate enclosed storage compartments of flexible sizes with separate access may be supported; correspondingly, should two fixed partitioning walls in parallel or essentially in parallel with one another be provided at different heights from the storage area bottom floor, then three separate levels of separate enclosed storage compartments of flexible sizes with separate access may be supported, and so forth. Each level may then comprise any arbitrary number of movable partitioning walls, such as e.g. one each.

"One or more" fixed partitioning walls may refer to "at least a first" fixed partitioning wall, whereas "fixed" partitioning wall may refer to "static and/or unmovable" partitioning wall. The expression fixed "partitioning wall", on the other hand, may refer to merely fixed "wall" and further to fixed "partitioning section", "separating wall" and/or "dividing wall". The expression "arranged" such that they in combination with the at least first movable partitioning wall and at least one respective closing arrangement may in this context refer to "positioned" and/or "located" such that they in combination with the at least first movable partitioning wall and at least one respective closing arrangement, whereas "in combination with" the at least first movable partitioning wall and at least one respective closing arrangement in this context may refer to "together with" and/or "by connecting with" the at least first movable partitioning wall and at least one respective closing arrangement. Moreover, "closing arrangement" may refer to "closing means", whereas "provide that" in this context may refer to "support that". "Enclosed" storage compartment may refer to "closable" storage compartment, whereas "supporting" separate access may refer to "providing" and/or "enabling" separate access. Separate "access" on the other hand may refer to separate "availability".

Optionally, the location request signal may be based on a storage volume request associated with a first party. Arranging the at least first movable partitioning wall then further comprises arranging the at least first movable partitioning wall such that a selected separate storage compartment out of the at least first and second separate storage compartments meets the requested storage volume. The storage area disposition system then further assigns the selected separate storage compartment to the first party. Thereby, one or more of the at least first movable partitioning wall is arranged based on a storage volume associated with a party - e.g. a luggage volume indicated by a potential ride-sharing vehicle occupant and/or a cargo volume indicated by a cargo planning operator - in such a manner that one of the separate luggage compartments is adapted to suit the requested storage volume, and the selected separate luggage compartment is then reserved for that party. Accordingly, different separate storage compartments may be adapted to meet different storage volume requests and further be assigned to respective party requesting the corresponding storage volume. Consequently, the storage area may be divided into reservable separate adjustable storage compartments to meet different storage volume requests of different parties, such as e.g. different requested luggage volumes of different potential ride-sharing vehicle occupants and/or different requested cargo volumes of different potential cargo planning operators. It may be noted that the first party may be assigned more than one selected storage compartment.

The storage volume request may for instance be received from an electronic user device as discussed above, potentially via a vehicles management system supporting communication with one or more vehicles similarly discussed above. That is, the optional electronic user device may e.g. comprise a booking and/or reservation application allowing a storage volume request to be provided therefrom. Said electronic user device may for instance comprise a ride-sharing booking and/or reservation application enabling a person to make a ride-sharing reservation not only for himself/herself or someone else, but additionally for his/her - or that other person's - luggage. Similarly, the electronic user device may for instance additionally or alternatively comprise a cargo booking and/or reservation application enabling a cargo planning operator to make a reservation for transportation of cargo. The storage volume may be provided in any arbitrary manner, e.g. manually by the person making the reservation and/or provided with support from one or more images and/or movie clips of the e.g. luggage and/or cargo e.g. taken with a camera associated with and/or comprised in said electronic user device. Mapping and/or calculations of a requested storage volume to a desired location of the at least first movable partitioning wall, and/or assigning of the selected separate storage compartment to the first party, may for instance be accomplished by the storage area disposition system in the vehicle and/or with support from e.g. the exemplifying booking and/or reservation application in the electronic user device.

The expression that the location request signal "is based on" a storage volume request may refer to that the location request signal "is derived from" a storage volume request, whereas "is based on" further may refer to "is based on at least" and/or "takes into account" . "Storage" volume request may refer to "cargo" and/or "luggage" volume request, whereas storage volume "request" may refer to storage volume "request signal" and/or "input". Storage volume request "associated with" a first party may refer to storage volume request "indicated by", "indicated to relate to", "related to", and/or "derivable from" a first party, whereas "first" party may refer merely to "party". First "party", on the other hand, may refer to first "entity", "vehicle occupant", "rider", "ride-sharing vehicle occupant", "luggage" and/or "cargo". The expression "a selected" separate storage compartment may refer to "at least a first selected" and/or "a dedicated" separate storage compartment, and further to merely "a" separate storage compartment. "Out of" the at least first and second separate storage compartments may refer to "from" the at least first and second separate storage compartments, whereas the expression "a selected separate storage compartment out of said at least first and second separate storage compartments meets" the requested storage volume, may refer to "one of said at least first and second separate storage compartments is selected to meet" the requested storage volume. "Meets" the requested storage volume, on the other hand, may refer to "can store" and/or "has room enough to store" the requested storage volume. The expression "assigning said selected separate storage compartment to the first party" may refer to "reserving said selected separate storage compartment for the first party", whereas "to" the first party may refer to "to a first identity and/or ID associated with" the first party. Such an "identity and/or ID" may refer to an "electronic and/or digital identity or ID", commonly known in the art.

Optionally, the storage volume request may further comprise a weight indication associated with the requested storage volume. Arranging the at least first movable partitioning wall then further comprises arranging the at least first movable partitioning wall such that selection of the selected separate storage compartment takes into account the weight indication. Thereby, consideration is taken to which separate storage compartment may be suitable in view of expected weight of the luggage/cargo. Thus, not only is the dedicated separate storage compartment adapted to the requested storage volume, but additionally is selection of storage compartment based on indicated weight of the expected luggage/cargo. Accordingly, for e.g. luggage/cargo of relative extensive weight, storage compartments situated relatively low within the storage area may preferably be selected, and/or storage compartments may be selected such that extensive weight is distributed within the storage area in a preferred and/or suitable manner. Weight "indication" may refer to weight "input", whereas "associated with" the requested storage volume may refer to "for the luggage and/or cargo of" the requested storage volume". The expression "selection of the selected separate storage compartment takes into account" may refer to "the selected separate storage compartment is selected based on", whereas "takes into account" the weight indication may refer to "is based at least on" the weight indication.

Optionally, the storage volume request may further additionally or alternatively comprise a target destination indication associated with the requested storage volume. Arranging the at least first movable partitioning wall then further comprises arranging the at least first movable partitioning wall such that selection of the selected separate storage compartment takes into account the target destination indication. Thereby, consideration is taken to which separate storage compartment may be suitable in view of indicated target destination of the luggage/cargo. Thus, not only is the dedicated separate storage compartment adapted to the requested storage volume, but additionally is selection of storage compartment based on target destination of the expected luggage/cargo. Accordingly, for e.g. luggage/cargo with a target destination of a relative short distance, storage compartments situated such that they are relatively easily accessible, reachable and/or close to e.g. a tailgate may preferably be selected. The expression target destination "indication" may refer to target destination "input". "Target destination", on the other hand, may refer to "geographical target destination" and/or "end destination", whereas "associated with" the requested storage volume may refer to "for the luggage and/or cargo of" the requested storage volume". The expression "selection of the selected separate storage compartment takes into account" may refer to "the selected separate storage compartment is selected based on", whereas "takes into account" the target destination indication may refer to "is based at least on" the target destination indication.

Optionally, the first party may be associated with a first access code and/or digital key. The storage area disposition system then further enables the first access code and/or digital key access to the selected separate storage compartment. Thereby, access to the selected separate storage compartment is restricted to a holder, receiver and/or carrier of said first access code and/or digital key. The selected separate storage compartment may accordingly be accessed via opening of its closing arrangement when the correct access code - i.e. the first access code - is e.g. punched in and/or given in connection with a lock on the closing arrangement and/or when the correct digital key - i.e. the first digital key - is provided e.g. wirelessly submitted. Opening of the closing arrangement of the selected separate storage compartment may thus be accomplished in a manner known in the art, provided that the first access code and/or digital key is produced. Access to the selected separate storage compartment may for instance be enabled should an electronic user device from which the first digital key wirelessly may be submitted, come within a predetermined distance from the vehicle, storage area disposition system and/or the selected separate storage area, such as e.g. within 50, 10 or 2 metres thereof. Accordingly, for instance a potential ride-sharing vehicle occupant who has knowledge of the first access code and/or e.g. carries an electronic user device from which the first digital key is submitted, may thus access the selected separate storage compartment for loading and/or unloading of his/her luggage. In a similar manner, for instance a potential cargo handling operator who has knowledge of the first access code and/or e.g. carries an electronic user device from which the first digital key is submitted, may thus access the selected separate storage compartment for loading and/or unloading of cargo intended for and/or stored in said selected storage compartment. The first access code and/or digital key may for instance have been associated with the first party in association with that the storage volume request was initiated. The expression that the first party "is associated" with a first access code and/or digital key may refer to that the first party "is assigned", "is tagged with", and/or "is given" a first access code and/or digital key, whereas "the first party" is associated with may refer to "an identity and/or ID associated with said first party" is associated with. "Access code" may refer to "unlock code", "locker code" and/or "digit code", whereas "digital key" may refer to "unique digital key", "personal digital key" and/or "digital token". "Enabling" the first access code and/or digital key access may refer to "providing" and/or "allowing" the first access code and/or digital key access, whereas "enabling said first access code and/or digital key access" may refer to "supporting access to the first access code and/or digital key". "Access to" the selected separate storage compartment, on the other hand, may refer to "to unlock" and/or to "to unlock a locking mechanism of the closing arrangement of" the selected separate storage compartment.

According to a second aspect of embodiments herein, the object is achieved by a storage area disposition system of a vehicle for handling storage space of a vehicle storage area. The storage area disposition system comprises a location request receiving unit for - and/or adapted for - receiving a location request signal associated with a desired location of at least a first movable partitioning wall of the storage area. The storage area disposition system further comprises a partitioning wall arranging unit of the storage area disposition system for - and/or adapted for - arranging the at least first movable partitioning wall in the desired location, wherein the at least first movable partitioning wall divides the storage area into at least a first and a second separate storage compartment.

Optionally, the storage area disposition system may further comprise one or more electrical motors, whereby the partitioning wall arranging unit then may be adapted for arranging the at least first movable partitioning wall by means of said one or more electrical motors.

Optionally, the storage area may further comprise one or more fixed partitioning walls arranged such that they in combination with the at least first movable partitioning wall and at least one respective closing arrangement provide that the at least first and/or second separate storage compartment respectively is a separate enclosed storage compartment supporting separate access.

Optionally, the location request signal may be based on a storage volume request associated with a first party. The partitioning wall arranging unit is then further adapted for arranging the at least first movable partitioning wall such that a selected separate storage compartment out of the at least first and second separate storage compartments meets the requested storage volume. The storage area disposition system then further comprises a compartment assigning unit for - and/or adapted for - assigning the selected separate storage compartment to the first party.

Optionally, the storage volume request may further comprise a weight indication associated with the requested storage volume. The partitioning wall arranging unit may then further be adapted for arranging the at least first movable partitioning wall such that selection of the selected separate storage compartment takes into account the weight indication.

Optionally, alternatively and/or additionally, the storage volume request may further comprise a target destination indication associated with the requested storage volume. The partitioning wall arranging unit may then further be adapted for arranging the at least first movable partitioning wall such that selection of the selected separate storage compartment takes into account the target destination indication.

Optionally, the first party may be associated with a first access code and/or digital key. The storage area disposition system then further comprises an access enabling unit for - and/or adapted for - enabling the first access code and/or digital key access to the selected separate storage compartment.

Similar advantages as those mentioned in the foregoing in relation to the first aspect correspondingly apply to the second aspect, which is why these advantages are not further discussed.

According to a third aspect of embodiments herein, the object is achieved by a vehicle comprising a storage area disposition system as discussed above. Again, similar advantages as those mentioned in the foregoing in relation to the first aspect correspondingly apply to the third aspect, which is why these advantages are not further discussed.

According to a fourth aspect of embodiments herein, the object is achieved by a computer program product comprising a computer program containing computer program code means arranged to cause a computer or a processor to execute the steps of the storage area disposition system discussed in the foregoing, stored on a computer-readable medium or a carrier wave. Yet again, similar advantages as those mentioned in the foregoing in relation to the first aspect correspondingly apply to the fourth aspect, which is why these advantages are not further discussed.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying storage area disposition system according to embodiments of the disclosure;
**Fig. 2** illustrates a schematic view of the exemplifying storage area disposition system of Fig. 1;
**Fig. 3** illustrates a schematic view of an exemplifying storage area disposition system receiving a location request signal according to embodiments of the disclosure;
**Fig. 4** illustrates a schematic view of an exemplifying storage area disposition system receiving a location request signal in an alternative manner according to embodiments of the disclosure;
**Fig. 5** illustrates a schematic view of an exemplifying storage area disposition system enabling access to a selected separate storage compartment according to embodiments of the disclosure;
**Fig. 6** is a schematic block diagram illustrating an exemplifying storage area disposition system according to embodiments of the disclosure; and
**Fig. 7** is a flowchart depicting an exemplifying method performed by a storage area disposition system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to handling storage space of a vehicle storage area, there will be disclosed an approach which enables a storage area of a vehicle to be adapted storage wise.

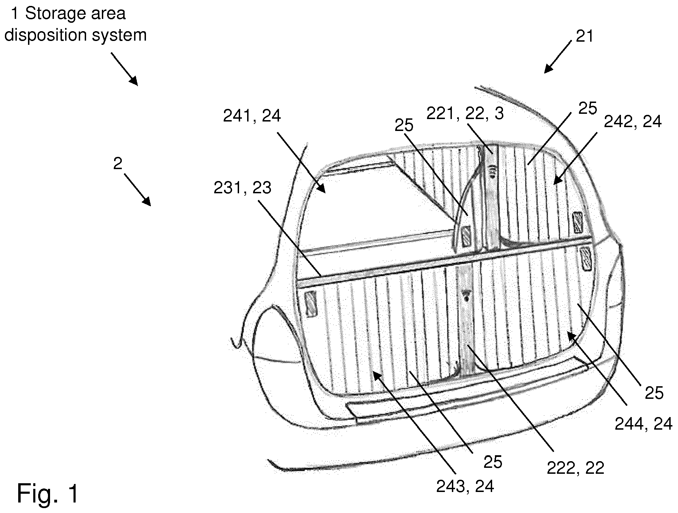

Referring now to the figures and **Figs. 1-2** in particular, there is depicted a schematic view of an exemplifying **storage area disposition system 1** according to embodiments of the disclosure. The storage area disposition system 1 is comprised in a **vehicle 2,** more specifically in association with a **vehicle storage area 21** here located in the rear of the vehicle 2. The vehicle 2 is here represented by an autonomous vehicle supporting ride-sharing. The storage area 21 and/or the storage area disposition system 1 comprises one or more **movable partitioning walls 22,** here an exemplifying **first movable partitioning wall 221** and an exemplifying **second movable partitioning wall 222** both of essentially rectangular shape, extending in an essentially vertical plane, with an exemplifying respective depth essentially coinciding with a depth of the storage area 21. The storage area 21 and/or the storage area disposition system 1 moreover optionally comprises one or more **fixed partitioning walls 23,** here an exemplifying **first fixed partitioning wall 231** and an exemplifying **second fixed partitioning wall 232** both of essentially rectangular shape, located in an essentially horizontal plane, with an exemplifying respective depth essentially coinciding with the depth of the storage area 21 and an exemplifying respective width essentially coinciding with the width of the storage area 21. The one or more movable partitioning walls 22 divides the storage area 21 into one or more **separate storage compartments 24;** here the first movable partitioning wall 221 - arranged in an exemplifying **desired location 3** - divides the storage area 21 into a **first separate storage compartment 241** and a **second separate storage compartment 242,** whereas the second movable partitioning wall 222 divides the storage area 21 into a **third separate storage compartment 243** and a **fourth separate storage compartment 244,** with the first fixed partitioning wall 231 dividing the storage area 21 into two levels and the second fixed partitioning wall 232 constituting a bottom floor of the lower level.

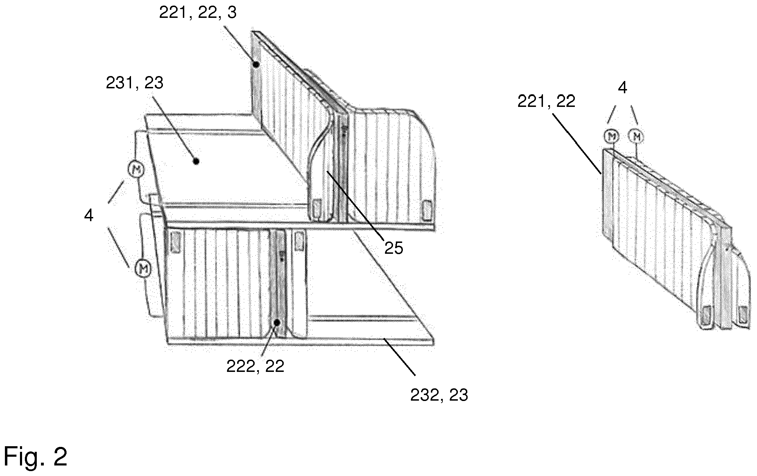

The one or more fixed partitioning walls 23 may optionally be arranged such that they in combination with the one or more movable partitioning walls 22 and at least one respective **closing arrangement 25** provide that the one or more separate storage compartments 24 respectively is a separate enclosed storage compartment 24 supporting separate access. The respective closing arrangement 25 for respective separate storage compartment 24 is here represented by a respective lockable jalousie. Shown in Fig. 2 is further one or more optional **electrical motors 4** adapted to arrange the one or more movable partitioning walls 22 in a respective desired location 3 and/or a respective default location, e.g. by means of a wire system. The movable partitioning walls 22 may here be moved in an essentially horizontal plane in an essentially transverse direction of the vehicle 2 and/or storage area 21.

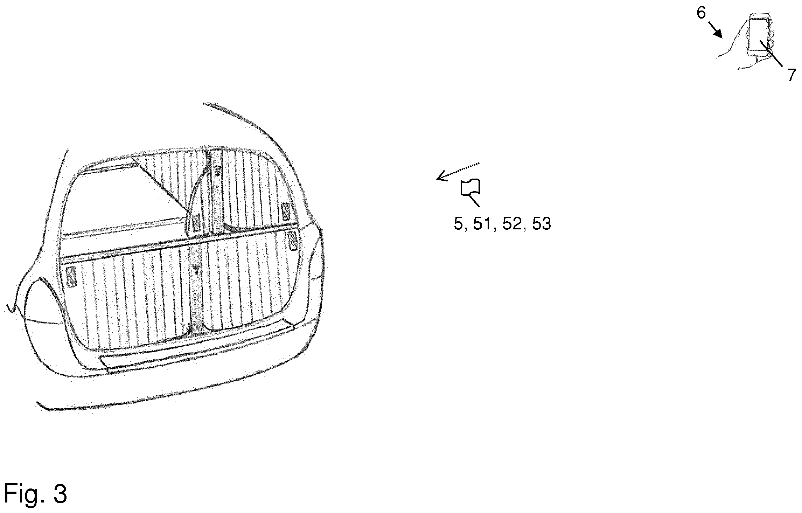

**Fig. 3** illustrates a schematic view of an exemplifying storage area disposition system 1 receiving a **location request signal 5** according to embodiments of the disclosure. The location request signal 5 may optionally be based on a **storage volume request 51** associated with a **first party 6;** here the first party 6 is represented by a potential ride-sharing vehicle occupant. The storage volume request 51 may optionally comprise a **weight indication 52** associated with the requested storage volume; additionally or alternatively, the storage volume request 51 may optionally comprise a **target destination indication 53** associated with the requested storage volume 51. The location request signal 5 is here received from an **electronic user device 7** e.g. represented by an exemplifying smartphone and further e.g. associated with the first party 6 here the ride-sharing vehicle occupant; for instance is the location request signal 5 received from an exemplifying booking and/or reservation system application running on said electronic user device 7.

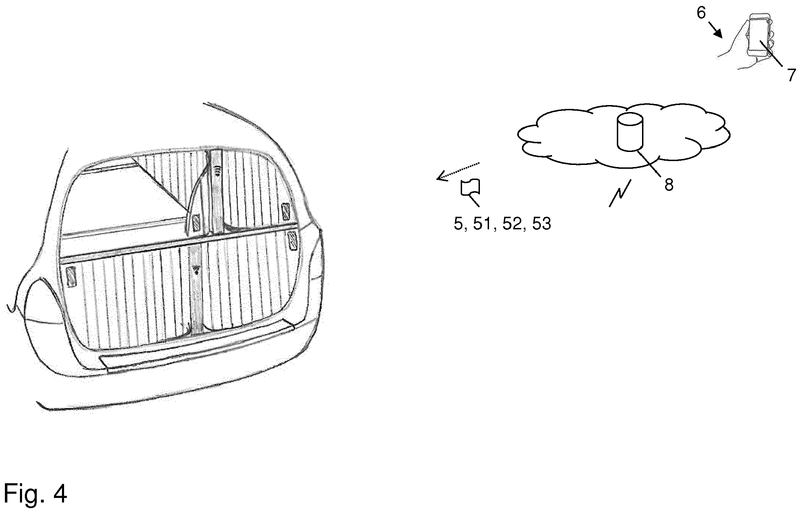

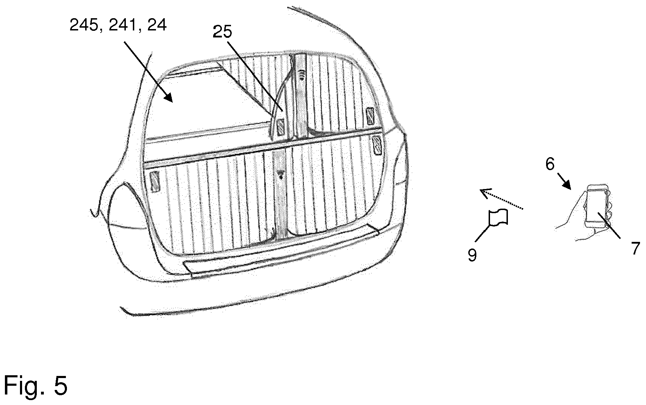

**Fig. 4** illustrates a schematic view of an exemplifying storage area disposition system 1 receiving a location request signal 5 in an alternative manner according to embodiments of the disclosure. The location request signal 5 of Fig. 4 is similar to the location request signal 5 of Fig. 5, with the exception that the location request signal of Fig. 5 here is received from the electronic user device 7 via an optional **vehicles management system 8** supporting communication with one or more vehicles.

**Fig. 5** illustrates a schematic view of an exemplifying storage area disposition system 1 enabling access to a **selected separate storage compartment 245** according to embodiments of the disclosure. The selected separate storage compartment 245 - which has been assigned to the first party 6 here represented by the ride-sharing vehicle occupant - is here equivalent to the first separate storage compartment 241 of Fig. 1. The first party 6 may optionally be associated with a **first access code and/or digital key 9,** by means of which the selected storage compartment 245 may be accessed. The first party 6 - here represented by the ride-sharing vehicle occupant having been assigned the selected separate storage compartment 245 - here carries an electronic user device 7, potentially but not necessarily the same electronic user device 7 illustrated in Figs. 3-4 from which the location request signal 5 according to those examples was submitted.

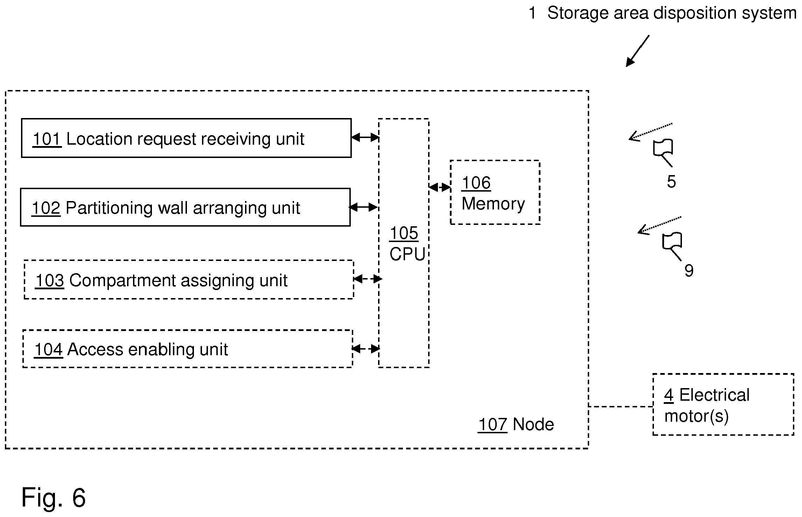

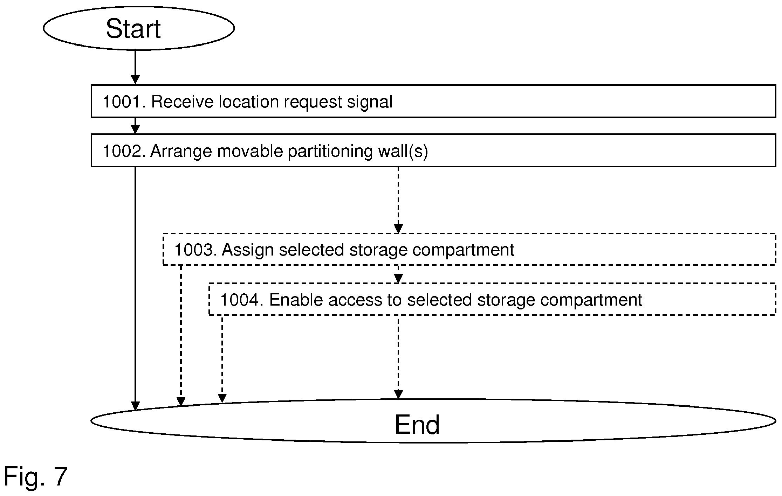

As further shown in **Fig. 6****,** which is a schematic block diagram illustrating an exemplifying storage area disposition system 1 according to embodiments of the disclosure, the storage area disposition system 1 comprises a **location request receiving unit 101,** a **partitioning wall arranging unit 102,** an optional **compartment assigning unit 103** and an optional **access enabling unit 104,** all of which will be described in greater detail in conjunction with Fig. 7. Furthermore, the embodiments herein for handling storage space of a vehicle storage area 21, may be implemented through one or more processors, such as a **processor 105,** here denoted CPU, together with computer program code for performing the functions and actions of the embodiments herein. Said program code may also be provided as a computer program product, for instance in the form of a data carrier carrying computer program code for performing the embodiments herein when being loaded into the storage area disposition system 1. One such carrier may be in the form of a CD ROM disc. It is however feasible with other data carriers such as a memory stick. The computer program code may furthermore be provided as pure program code on a server and downloaded to the storage area disposition system 1. The storage area disposition system 1 may further comprise a **memory 106** comprising one or more memory units. The memory 106 may be arranged to be used to store e.g. information, and further to store data, configurations, schedulings, and applications, to perform the methods herein when being executed in the storage area disposition system 1. For instance, the computer program code may be implemented in the firmware, stored in FLASH memory 106, of an embedded processor 105.

Furthermore, the location request receiving unit 101, the partitioning wall arranging unit 102, the optional compartment assigning unit 103, the optional access enabling unit 104, the optional processor 105 and/or the optional memory 106 may at least partly be comprised in the vehicle 2 - for instance in one or more **nodes 107** thereof such as electronic control units (ECUs). Those skilled in the art will also appreciate that said units 101, 102, 103, 104 described above, and which will be described in more detail later on in this description, may refer to a combination of analog and digital circuits, and/or one or more processors configured with software and/or firmware, e.g. stored in a memory such as the memory 106, that when executed by the one or more processors such as the processor 105 perform as will be described in more detail in conjunction with Fig. 7. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

**Fig. 7** is a flowchart depicting an exemplifying method performed by a storage area disposition system 1 according to embodiments of the disclosure. Said method is for handling storage space of a vehicle storage area 21. The exemplifying method, which may be continuously repeated, comprises the following actions discussed with support from Figs. 1-6.

### Action 1001

In Action 1001, the storage area disposition system 1 receives - e.g. by means of the location request receiving unit 101 - a location request signal 5 associated with a desired location 3 of at least a first movable partitioning wall 221 of the storage area 21. Thus, as shown with support from at least Figs. 1-4 and Fig. 6, electronic input 5 is received indicating a position 3 of where at least one movable storage area section wall 22, here the first movable partitioning wall 221, is wanted and/or requested. That is, the one or more movable partitioning walls 22 may have respective default locations from which they may be rearranged, for instance moved in an essentially horizontal direction and/or an essentially vertical direction within the storage area 21. In the embodiments of Fig. 1-4, the first movable partitioning wall 221 and the second movable partitioning wall 222 are movable essentially horizontally in an essentially transverse direction of the vehicle 2, which here correspondingly is essentially a transverse direction of the storage area 21.

Optionally, the location request signal 5 may be based on a storage volume request 51 associated with a first party 6. Thus, as shown with support from at least Figs. 3-4, a desired storage volume 51 may be indicated by - or for - the first party 6, here the potential ride-sharing vehicle occupant.

### Action 1002

In Action 1002, the storage area disposition system 1 arranges - e.g. by means of the partitioning wall arranging unit 102 - the one or more movable partitioning walls 22 in the respective desired location 3, wherein the one or more movable partitioning walls 22 divides the storage area 21 into two or more separate storage compartments 24. Thus, as shown with support from at least Figs. 1-2 and Fig. 6, the one or more movable partitioning walls 22 are positioned in accordance with the respective requested disposition 3 such that two or more separate storage compartments 24 are provided respectively having sizes affected by one or more of the locations 3 of the one or more movable partitioning walls 22. Thereby, with the introduction of one or more movable partitioning walls 22 within the storage area 21, two or more separate storage compartments 24 of flexible size are provided and/or supported, the sizes thereof 24 depending on one or more of the locations 3 of the one or more movable partitioning walls 22. Accordingly, the size of respective separate storage compartment 24 may be adapted in a flexible manner, for instance to suit a respective volume of luggage and/or cargo planned for storage in respective separate storage compartment 24, e.g. by one or more potential ride-sharing vehicle occupants. In the embodiments of Fig. 1-4, the first movable partitioning wall 221 is moved to the desired location 3.

Optionally, the Action 1002 of arranging the one or more movable partitioning walls 22 may comprise arranging the one or more movable partitioning walls 22 by means of one or more electrical motors 4 comprised in the storage area disposition system 1. Thus, as shown with support from at least Fig. 2 and Fig. 6, the one or more movable partitioning walls 22 may be moved and/or rearranged in a convenient manner; here the first partitioning wall 221 is moved in an essentially horizontal plane in an essentially transverse direction. The number of electrical motors 4 and/or positioning thereof may be arbitrarily selected as deemed appropriate for the implementation at hand, e.g. may each respective movable partitioning wall 221, 22 be supported by a respective electrical motor 4, e.g. with support from a wire system.

Optionally, the storage area 21 may further comprise one or more fixed partitioning walls 23 arranged such that they 23 in combination with the one or more movable partitioning walls 22 and at least one respective closing arrangement 25 provide that the one or more separate storage compartment 24 respectively is a separate enclosed storage compartment 24 supporting separate access. Thus, as shown with support at least from Fig. 1, the storage area 21 may be divided into separate enclosed storage compartments 24 with individual access, in Fig. 1 in two different levels separated by the first fixed partitioning walls 231. Thus, each respective separate enclosed storage compartment 24 provided with support from the one or more fixed partitioning walls 22 - which respective separate enclosed storage compartment 24 supports separate access by means of at least one respective closing arrangement 25 - may accordingly be suitable for storing luggage and/or cargo to which separate access is preferable and/or requested. The closing arrangement 25 may for instance be represented by and/or comprise a roll-out, roll-up or roll-down curtain, cover or jalousie or the like; in Fig. 1, respective closing arrangement 25 is represented by a lockable jalousie.

Should the location request signal 5 be based on the storage volume request 51 associated with the first party 6, then the Action 1002 of arranging the one or more movable partitioning walls 22, comprises arranging the one or more movable partitioning walls 22 such that a selected separate storage compartment 245 out of the two or more separate storage compartments 24 meets the requested storage volume 51. Thus, as shown with support from at least Fig. 5, the first separate storage compartment 241 is selected as the selected separate storage compartment 245, and the first movable partitioning wall 221 is accordingly arranged such that the selected separate storage compartment 245, 241 meets the requested storage volume 51.

Furthermore, optionally, should the location request signal 5 be based on the storage volume request 51 associated with the first party 6, then the storage volume request 51 may further comprise a weight indication 52 associated with the requested storage volume 51. The Action 1002 of arranging the one or more movable partitioning walls 22, then further comprises arranging the one or more movable partitioning walls 22 such that selection of the selected separate storage compartment 245 takes into account the weight indication 52. Thus, as shown with support at least from Figs. 3-5, consideration is taken to which separate storage compartment 24 may be suitable in view of expected weight of the luggage/cargo. Thus, not only is the dedicated separate storage compartment 245 adapted to the requested storage volume 51, but additionally is selection of storage compartment 24 based on indicated weight 52 of the expected luggage/cargo. Accordingly, for instance for luggage/cargo of relative extensive weight, storage compartments 24, 243, 244 situated relatively low within the storage area 21 may preferably be selected, and/or storage compartments 24 may be selected such that extensive weight is distributed within the storage area 21 in a preferred and/or suitable manner. In the shown example of Fig. 5, the first separate storage compartment 241 is selected as the selected separate storage compartment 245.

Furthermore, optionally, should the location request signal 5 be based on the storage volume request 51 associated with the first party 6, then the storage volume request 51 may further comprise a target destination indication 53 associated with the requested storage volume 51. The Action 1002 of arranging the one or more movable partitioning walls 22, then further comprises arranging the one or more movable partitioning walls 22 such that selection of the selected separate storage compartment 245 takes into account the target destination indication 53. Thus, as shown with support at least from Figs. 3-5, consideration is taken to which separate storage compartment 24 may be suitable in view of indicated target destination 53 of the luggage/cargo. Thus, not only is the dedicated separate storage compartment 245 adapted to the requested storage volume 51, but additionally is selection of storage compartment 24 based on target destination 53 of the expected luggage/cargo. Accordingly, for instance for luggage/cargo with a target destination 53 of a relative short distance, storage compartments 24 situated such that they are relatively easily reachable and/or close to e.g. a tailgate may preferably be selected. In the shown example of Fig. 5, the first separate storage compartment 241 is selected as the selected separate storage compartment 245.

### Action 1003

Should the location request signal 5 be based on the storage volume request 51 associated with the first party 6, then, in optional Action 1003, the storage area disposition system 1 assigns - e.g. by means of the optional compartment assigning unit 103 - the selected separate storage compartment 245 to the first party 6. Thus, as shown with support from at least Figs. 3-6, at least one 221 of the one or more movable partitioning walls 22 is arranged based on a storage volume associated with a party 6 - e.g. a luggage volume 51 indicated by a potential ride-sharing vehicle occupant - in such a manner that one 245 of the separate luggage compartments 24 is adapted to suit the requested storage volume 51, and the selected separate luggage compartment 245 is then reserved for that party 6. Accordingly, different separate storage compartments 24 may be adapted to meet different storage volume requests 51 and further be assigned to respective party 6 requesting the corresponding storage volume 51. Consequently, the storage area 21 may be divided into reservable separate adjustable storage compartments 24 to meet different storage volume requests 51 of different parties 6, such as e.g. different requested luggage volumes 51 of different potential ride-sharing vehicle occupants and/or different requested cargo volumes 51 of different potential cargo planning operators. In the shown example of Fig. 5, the first separate storage compartment 241 is assigned to the first party 6 - here the ride-sharing vehicle occupant.

### Action 1004

Optionally, the first party 6 may be associated with a first access code and/or digital key 9. In optional Action 1004, the storage area disposition system 1 then enables - e.g. by means of the optional access enabling unit 104 - the first access code and/or digital key 9 access to the selected separate storage compartment 245.

Thus, as shown with support from at least Figs. 5-6, access to the selected separate storage compartment 245 is restricted to a holder, receiver and/or carrier 6, 7 of said first access code and/or digital key 9. The selected separate storage compartment 245 may accordingly be accessed via opening of its closing arrangement 25 when the correct access code - i.e. the first access code 9 - is e.g. punched in in connection with a lock on the closing arrangement and/or when the correct digital key - i.e. the first digital key 9 - is provided e.g. wirelessly submitted. Opening of the closing arrangement 25 of the selected separate storage compartment may thus be accomplished in a manner known in the art, provided that the first access code and/or digital key 9 is produced. Access to the selected separate storage compartment 245 may for instance be enabled should an electronic user device 7 from which the first digital key 9 wirelessly may be submitted, come within a predetermined distance from the vehicle 2, storage area disposition system 1 and/or the selected separate storage area 245, such as e.g. within 50, 10 or 2 metres thereof. Accordingly, for instance a potential ride-sharing vehicle occupant who has knowledge of the first access code 9 and/or e.g. carries an electronic user device 7 from which the first digital key 9 is submitted, may thus access the selected separate storage compartment 245 for loading and/or unloading of his/her luggage. In a similar manner, for instance a potential cargo handling operator who has knowledge of the first access code 9 and/or e.g. carries an electronic user device 7 from which the first digital key 9 is submitted, may thus access the selected separate storage compartment 245 for loading and/or unloading of cargo intended for and/or stored in said selected storage compartment 245. In the shown example of Fig. 5, the ride-sharing vehicle occupant 6 assigned the selected separate storage compartment 245, 241, is enabled access to said selected storage compartment 245, 241 for loading/unloading of luggage, in that he or she carries an electronic user device 7 from which the first digital key 9 is submitted.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a storage area disposition system (1) of a vehicle (2) for handling storage space of a vehicle storage area (21), said method comprising:
***receiving*** (1001) a location request signal (5) associated with a desired location (3) of at least a first movable partitioning wall (221) of said storage area (21); and
said storage area disposition system (1) ***arranging*** (1002) said at least first movable partitioning wall (221, 22) in said desired location (3), wherein said at least first movable partitioning wall (221, 22) divides said storage area (21) into at least a first (241) and a second (242) separate storage compartment.

2. The method according to claim 1, wherein said area disposition system (1) comprises one or more electrical motors (4), said *arranging* (1002) then comprising arranging said at least first movable partitioning wall (221, 22) by means of said one or more electrical motors (4).

3. The method according to claim 1 or 2, wherein said storage area (21) further comprises one or more fixed partitioning walls (23) arranged such that they (23) in combination with said at least first movable partitioning wall (221, 22) and at least one respective closing arrangement (25) provide that said at least first (241) and/or second (242) separate storage compartment (24) respectively is a separate enclosed storage compartment (24) supporting separate access.

4. The method according to any one of claims 1-3, wherein said location request signal (5) is based on a storage volume request (51) associated with a first party (6), said *arranging* (1002) then further comprising arranging said at least first movable partitioning wall (221, 22) such that a selected separate storage compartment (245) out of said at least first (241) and second (242) separate storage compartments (24) meets said requested storage volume (51), said method then further comprising:
***assigning*** (1003) said selected separate storage compartment (245) to said first party (6).

5. The method according to claim 4, wherein said storage volume request (51) further comprises a weight indication (52) associated with said requested storage volume (51), said *arranging* (1002) then further comprising arranging said at least first movable partitioning wall (221, 22) such that selection of said selected separate storage compartment (245) takes into account on said weight indication (52).

6. The method according to claim 4 or 5, wherein said storage volume request (51) further comprises a target destination indication (53) associated with said requested storage volume (51), said *arranging* (1002) then further comprising arranging said at least first movable partitioning wall (221, 22) such that selection of said selected separate storage compartment (245) takes into account said target destination indication (53).

7. The method according to any one of claims 4-6, wherein said first party (6) is associated with a first access code and/or digital key (9), said method then further comprising:
***enabling*** (1004) said first access code and/or digital key(9) access to said selected separate storage compartment (245).

8. A **storage area disposition system** (1) of a vehicle (2) for handling storage space of a vehicle storage area (21), said storage area disposition system (1) comprising:
a **location request receiving unit** (101) for ***receiving*** (1001) a location request signal (5) associated with a desired location (3) of at least a first movable partitioning wall (221) of said storage area (21); and
a **partitioning wall arranging unit** (102) of said storage area disposition system (1) for ***arranging*** (1002) said at least first movable partitioning wall (221, 22) in said desired location (3), wherein said at least first movable partitioning wall (221, 22) divides said storage area (21) into at least a first (241) and a second (242) separate storage compartment.

9. The storage area disposition system (1) according to claim 8 further comprising one or more electrical motors (4), wherein said partitioning wall arranging unit (102) then is adapted for arranging said at least first movable partitioning wall (221, 22) by means of said one or more electrical motors (4).

10. The storage area disposition system (1) according to claim 8 or 9, wherein said storage area (21) further comprises one or more fixed partitioning walls (23) arranged such that they (23) in combination with said at least first movable partitioning wall (221, 22) and at least one respective closing arrangement (25) provide that said at least first (241) and/or second (242) separate storage compartment (24) respectively is a separate enclosed storage compartment (24) supporting separate access.

11. The storage area disposition system (1) according to any one of claims 8-10, wherein said location request signal (5) is based on a storage volume request (51) associated with a first party (6), said partitioning wall arranging unit (102) then further being adapted for arranging said at least first movable partitioning wall (221, 22) such that a selected separate storage compartment (245) out of said at least first (241) and second (242) separate storage compartments (24) meets said requested storage volume (51), said storage area disposition system (1) then further comprising:
a **compartment assigning unit** (103) for ***assigning*** (1003) said selected separate storage compartment (245) to said first party (6).

12. The storage area disposition system (1) according to claim 11, wherein said storage volume request (51) further comprises a weight indication (52) associated with said requested storage volume (51), said partitioning wall arranging unit (102) then further being adapted for arranging said at least first movable partitioning wall (221, 22) such that selection of said selected separate storage compartment (245) takes into account said weight indication (52).

13. The storage area disposition system according to claim 11 or 12, wherein said storage volume request (51) further comprises a target destination indication (53) associated with said requested storage volume (51), said partitioning wall arranging unit (102) then further being adapted for arranging said at least first movable partitioning wall (221, 22) such that selection of said selected separate storage compartment (245) takes into account said target destination indication (53).

14. The storage area disposition system (1) according to any one of claims 11-13, wherein said first party (6) is associated with a first access code and/or digital key (9), said storage area disposition system (1) then further comprising:
an **access enabling unit** (103) for ***enabling*** (1004) said first access code and/or digital key (9) access to said selected separate storage compartment (245).

15. A **vehicle** (2) comprising a storage area disposition system (1) according to any one of claims 8-14.
